# EUROPEAN PATENT SPECIFICATION

(11) **EP 1 745 378 B1**
(45) Date of publication and mention of the grant of the patent: **08.04.2009**
(21) Application number: 05734298.2
(22) Date of filing: 18.04.2005
(51) Int. Cl.: G06F 11/20, H04L 12/56

(54) **NETWORK RESOURCE MANAGEMENT DEVICE**
NETZWERK-BETRIEBSMITTELVERWALTUNGSEINRICHTUNG
DISPOSITIF DE GESTION DES RESSOURCES D'UN RESEAU

(30) Priority: 23.04.2004 JP 2004128448
(43) Date of publication of application: 24.01.2007
(73) Proprietor: Panasonic Corporation, Kadoma-shi Osaka 571-8501 (JP)
(72) Inventor: OHURA, Masato, Fukuoka-Ken, Kasuga (JP); ANDO, Satoshi, Fukuoka-Ken, Munakata-Gun (JP); KAWAGUCHI, Yuichi, Fukuoka-Ken, Kasuya-Gun (JP); OHMOTO, Masao, Fukuoka-Ken, Kasuya-Gun (JP)
(74) Representative: Balsters, Robert
(86) International application number: PCT/JP2005/007751
(87) International publication number: WO 2005/103897

(56) References cited:
- EP-A- 1 404 059
- US-A- 6 128 657
- US-B1- 6 687 222

## Description

### Technical Field

The present invention relates to a resource management device managing a communication network such as a packet switching network. Such device in line with the preamble of present claim 1 is known from the document US 6 128657

### Background Art

Document 1 (RFC2816 of IETF "A Framework for Integrated Services Over Shared and Switched IEEE 802 LAN Technologies", May 2000) discloses an art managing a resource such as a communication bandwidth in a packet switching network.

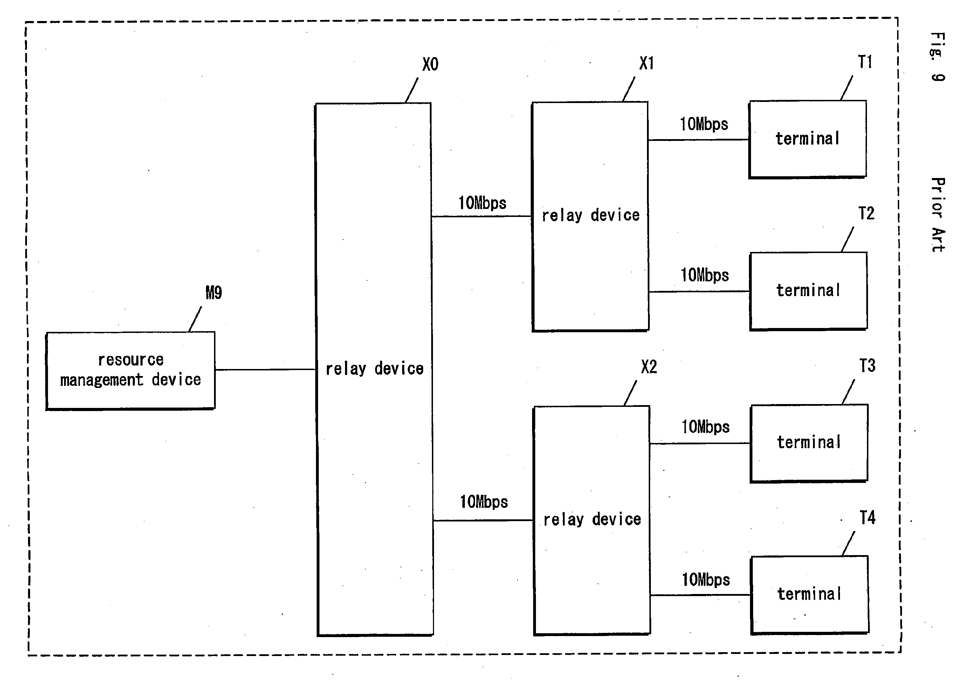

Fig. 9 is a diagram illustrating a network structure using the conventional resource management device. In Fig. 9, relay devices X0 to X2 constitute a communication network. Terminals T1 and T2 connect to the communication network via the relay device X1, terminals T3 and T4 connect to the communication network via the relay device X2. A resource management device M9 connects to the communication network via the relay device X0. The terminals T1 to T4 can communicate mutually via the communication network.

The resource management device M9 manages reservation of a communication resource regarding all the terminals T1 to T4. For example, when the terminal T1 requests reservation of a communication resource, the terminal T1 requests the resource management device M9 to reserve the communication resource. The resource management device M9 performs judgment to the reservation request according to network conditions, and sends the judged result to the terminal T1. The terminal T1 performs the communication when the reservation is available, and cancels the communication when the reservation is unavailable.

In describing the present specification, a transmitter, a receiver, and a relay device are generically called a communication device.

As illustrated in Fig. 9, in the conventional resource management system, it is assumed that a single resource management device exists in the communication network. When the resource management device stops operation for some reason, it becomes completely impossible to manage the resource, revealing low robustness in management of the resource management system. Moreover, since resource reservation for all communication devices is processed with the single resource management device, the processing load per resource management device is heavy.

Document EP 1 404 059 reflects further conventional technology

### Disclosure of Invention

Accordingly, an object of the present invention is to increase the robustness of management and to provide a resource management device that can reduce processing burden per resource management device. The present invention is defined in the appended claims.

A first aspect of the present invention provides a resource management device operable to manage, in harmony with another management device, resource reservation on a network to which a plurality of communication devices are able to connect, the resource management device comprising: a resource reservation information managing unit operable to store reserved resource information, wherein the reserved resource information stored by the resource reservation information managing unit is shared with the other management device.

A second aspect of the present invention provides the resource management device as claimed in the first aspect, further comprising: a reservation judgment unit operable to judge whether or not reservation based on a reservation request from a communication device connecting to the network should be permitted, thereby storing reserved resource information concerning the reservation to the resource reservation information managing unit when the reservation is judged to be permitted; a resource reservation information transmitting unit operable to transmit to the other management device the reserved resource information that the reservation judgment unit has stored to the resource reservation information managing unit; and a resource reservation information receiving unit operable to receive reserved resource information from the other management device, thereby storing the received reserved resource information to the resource reservation information managing unit.

According to the present structures, since the reserved resource information is shared with the other communication management device, the resource management device can possess all the reserved resource information of the communication network. Accordingly, when the resource management device receives a resource reservation request from the communication device, the resource reservation device can perform judgment of the resource reservation with reference to all the reserved resource information of the communication network

A third aspect of the present invention provides the resource management device as claimed in the first aspect, further comprising: a resource reservation information requesting unit operable to transmit to the other management device a transmission request for reserved reservation information, wherein the resource reservation information requesting unit is further operable to transmit to the other management device the reserved resource information stored by the resource reservation information managing unit according to a transmission request from the other management device.

According to the present structure, when the resource management device is activated, the resource management device collects the reserved resource information from the other resource management device that is connected to the communication network, and can perform judgment of the resource reservation.

A fourth aspect of the present invention provides the resource management device as claimed in the first aspect, further comprising: a mode information managing unit operable to store operation mode information; and a mode setting unit operable to determine operation mode information of the resource management device, thereby storing the determined operation mode information to the mode information managing unit.

According to the present structure, by using mode information, the resource management device can set up or change by itself the processing contents of the resource reservation request which is received from the communication device.

A fifth aspect of the present invention provides the resource management device as claimed in the fourth aspect, wherein a mode indicated by the operation mode information includes a master mode where the resource management device itself performs reservation judgment.

A sixth aspect of the present invention provides the resource management device as claimed in the fourth aspect, wherein a mode indicated by the operation mode information includes a proxy mode where the resource management device does not perform reservation judgment and entrusts the reservation judgment to the other management device.

A seventh aspect of the present invention provides the resource management device as claimed in the fourth aspect, wherein a mode indicated by the operation mode information includes a halt mode where the resource management device is not concerned with reservation judgment.

According to the present structures, the resource management device can process in various modes the resource reservation request which is received from the communication device. For example, when the resource management device is in a MASTER mode, the resource management device can process the reservation request independently. When the resource management device is in a PROXY mode, the resource management device can entrust the reservation judgment to the other resource management device, thereby reducing its own processing burden. The PROXY mode is preferred when there are few system resources of the resource management device. Furthermore, when the resource management device is in a halt mode, the resource management device is released from the processing of the reservation request, and the resource management device can receive maintenance, if necessary.

An eighth aspect of the present invention provides the resource management device as claimed in the fourth aspect, further comprising: a resource reservation request transferring unit operable to receive a resource reservation request from a communication device connecting to the network, wherein the resource reservation request transferring unit is further operable to transfer the received resource reservation request to the other management device, after referring to the mode information managing unit.

A ninth aspect of the present invention provides the resource management device as claimed in the fourth aspect, further comprising: a mode information receiving unit operable to receive operation mode information from the other management device, thereby storing the received operation mode information to the mode information managing unit.

According to the present structures, the resource management device can transmit to and receive from the other resource management device information of reservation request. The resource management device can possess all the information of the resource reservation request transmitted from a communication device connected to the communication network. The resource management device can determine its own processing contents with reference to the information of the reservation request.

A tenth aspect of the present invention provides the resource management device as claimed in the fourth aspect, further comprising: a mode determining unit operable to determine operation mode information of the resource management device; and a mode information transmitting unit operable to transmit to the other management device the operation mode information determined by the mode determining unit.

An eleventh aspect of the present invention provides the resource management device as claimed in claim 10, further comprising: a mode information requesting unit operable to request the other management device to transmit operation mode information of the other management device, wherein the mode information requesting unit is further operable to notify the mode determining unit of the operation mode information received from the other management device.

According to the present structures, in activating the resource management device, the resource management device can collect information of resource reservation request from the other resource management device, and can determine its own processing contents.

The above, and other objects, features and advantages of the present invention will become apparent from the following description read in conjunction with the accompanying drawings, in which like reference numerals designate the same elements.

### Brief Description of Drawings

Fig. 1 is a diagram illustrating a network structure using resource management devices according to an embodiment of the present invention;
Fig. 2 is a block diagram illustrating the resource management device according to the embodiment of the present invention;
Figs. 3(a) to 3(d) are diagrams explaining states of a monitoring timer in the resource management device according to the embodiment of the present invention;
Fig. 4 is a flowchart illustrating a resource reservation request in the resource management device according to the embodiment of the present invention;
Fig. 5 is a diagram illustrating a network structure using the resource management devices according to the embodiment of the present invention;
Fig. 6 is a diagram illustrating a network structure using the resource management devices according to the embodiment of the present invention;
Figs. 7(a) to 7(e) are illustrations showing reserved bandwidth information according to the embodiment of the present invention;
Figs. 8(a) to 8(c) are illustrations showing connection states according to the embodiment of the present invention; and
Fig. 9 is a diagram illustrating a network structure of the conventional resource management system.

### Best Mode for Carrying Out the Invention

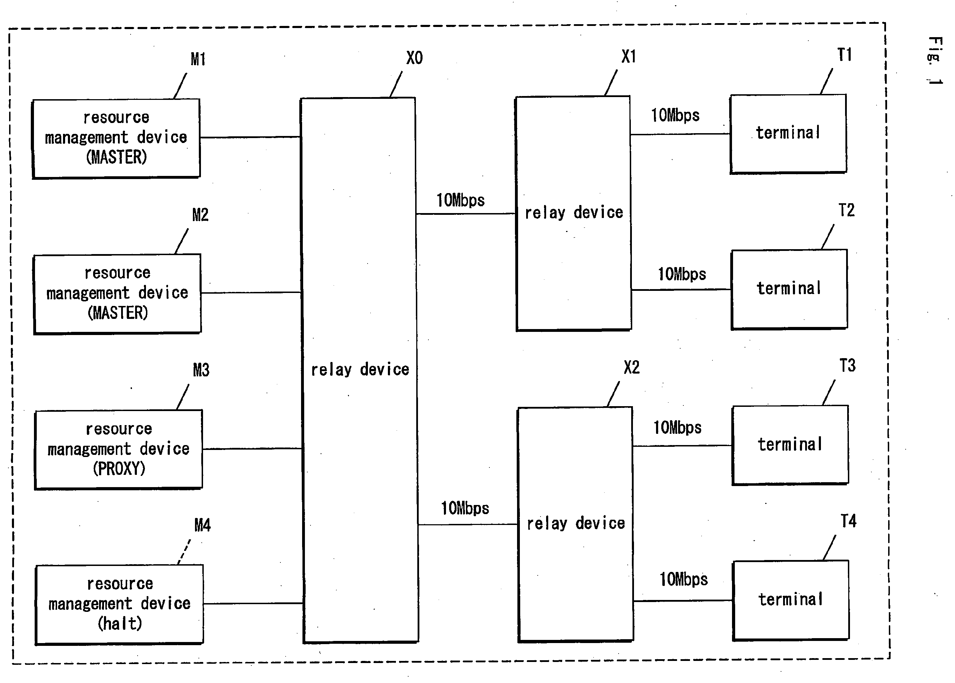

Hereafter, an embodiment of the present invention is explained with reference to the drawings. Fig. 1 is a diagram illustrating a network structure using the resource management devices according to the embodiment of the present invention. Fig.1 illustrates an initial state.

In the present embodiment, a communication bandwidth is used as a resource. Each value necessary at the time of packet relaying, such as processing delay time in a relay device, fluctuation of the processing delay time, a memory amount required in relaying, and a CPU processing amount, may be used as the resource in addition to the communication bandwidth.

Packet communication system illustrated in Fig. 1 includes four terminals T1 to T4, three relay devices X0 to X2, and four resource management devices M1 to M4. The terminals T1 to T4 operate as a transmitter which transmits a packet or as a receiver which receives a packet. In order to simplify explanation in the following, it is assumed that the terminals T1 and T2 operate as a transmitter and that the terminals T3 and T4 operate as a receiver.

It is repeatedly noted that, in the present specification, a transmitter, a receiver, and a relay device are generically called a communication device.

It is assumed that communication at a maximum bandwidth of 10Mbps is possible among the terminals T1 to T4 and relay devices X0, X1, and X2, and that the resource management devices M1 to M4 possess in advance information of connection state among the communication devices. The information of connection state includes a path, a maximum bandwidth, etc. The numerical values and the network structures illustrated in the present embodiment are merely examples; therefore, it is needless to say that various changes and modifications can be made.

Each of the resource management devices M1 to M4 in Fig. 1 can take two kinds of states, activated and inactivated, regarding the respective processing contents of resource reservation request. Each of the resource management devices M1 to M4 does not exchange mode information, when in the inactivated state (in the state of, for example, malfunction, cut-off of power supply, separation from the network, etc.). Each of the resource management devices M1 to M4 can take the following three modes, when in the activated state.
1. MASTER mode: The resource management device in the MASTER mode accepts a resource reservation request and performs reservation judgment. All the reserved resource information is shared with the other resource management devices.
2. PROXY mode: The resource management device in the PROXY mode does not perform judgment of resource reservation by itself, but transfers the resource reservation request, if received, to a resource management device in the MASTER mode.
3. Halt mode: The resource management device in the halt mode does not accept a resource reservation request, but is activated as a resource management device. It should be noticed that "the halt mode in the activated state" and "the inactivated state" are completely different state as mentioned above.

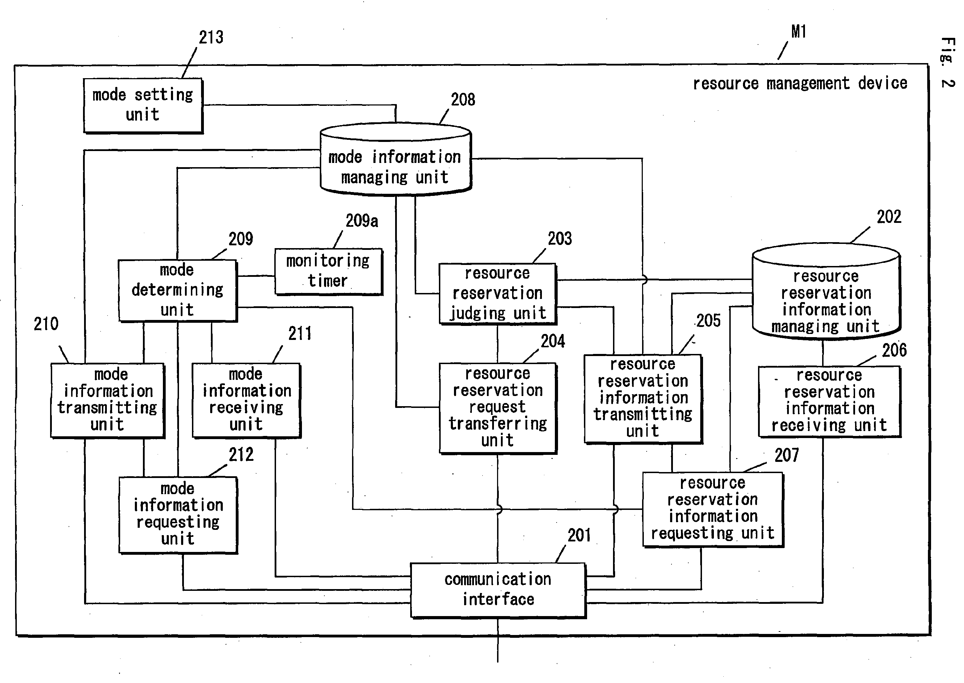

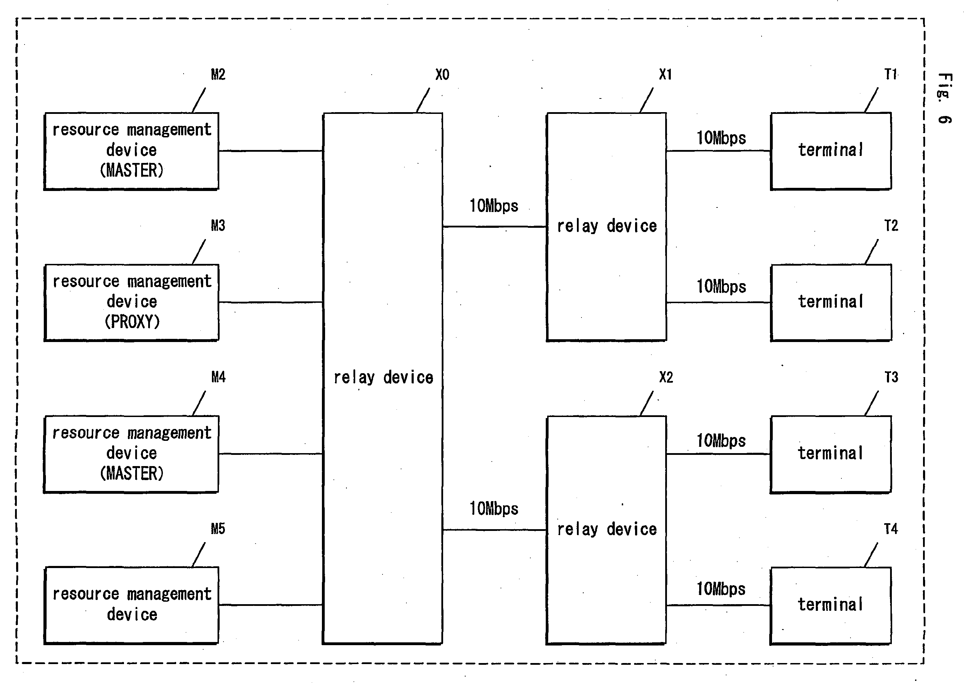

Next, the resource management device M1 is explained using Fig. 2. Since the resource management devices M1 to M4 and a resource management device M5 illustrated in Fig. 6 possess the same structure as of Fig. 2, the resource management device 1 is explained in detail.

A resource reservation information managing unit 202 comprises a storage medium such as a memory, and stores the reserved resource information and the connection information among the communication devices.

A resource reservation judging unit 203 receives a resource reservation request that a communication interface 201 has received from a communication device. The resource reservation judging unit 203 performs judgment of resource reservation with reference to the reserved resource information stored in the resource reservation information managing unit 202. The resource reservation judging unit 203 sends, to the communication device, the judgment result in response to the resource reservation request. When the resource reservation is available, the resource reservation judging unit 203 stores the reserved resource information to the resource reservation information managing unit 202, and notifies a resource reservation information transmitting unit 205 of the reserved resource information.

The resource reservation information transmitting unit 205 receives the reserved resource information from the resource reservation judging unit 203 or reads out one item or a plurality of items of the reserved resource information from the resource reservation information managing unit 202, and transmits the reserved resource information to the other resource management devices M2 to M4.

A resource reservation information receiving unit 206 receives the reserved resource information transmitted by the other resource management devices M2 to M4, and stores the reserved resource information to the resource reservation information managing unit 202.

When the resource management device M1 is activated, the resource reservation information requesting unit 207 transmits a transmitting request of the reserved resource information to the other resource management device M2 to M4 in order to collect all the reserved resource information. A resource reservation information requesting unit 207 belonging to one of the other resource management devices M2 to M4, which has received the transmitting request from the resource reservation information requesting unit 207 belonging to the resource management device M1, notifies its own resource reservation information transmitting unit 205 of the transmitting request.

A resource reservation request transferring unit 204 of the resource management device M1 receives a resource reservation request that a communication interface 201 has received from a communication device. The resource reservation request transferring unit 204 of the resource management, device M1 transfers the resource reservation request, as received without any processing, to the other resource management devices M2 to M4.

A mode information managing unit 208 comprises a storage medium such as a memory, and stores mode information of the resource management device M1.

A mode information transmitting unit 210 reads out the mode information from the mode information managing unit 208, and transmits the mode information to the other resource management devices M2 to M4 periodically.

A mode information receiving unit 211 receives mode information that the other resource management devices M2 to M4 have transmitted. The mode information receiving unit 211 notifies a mode determining unit 209 of the mode information.

When the resource management device M1 is activated, a mode information requesting unit 212 requests the other resource management devices M2 to M4 to transmit the mode information in order to collect the mode information that should be referred to when the resource management device M1 decides its own mode. A mode information requesting unit 212 belonging to the other resource management devices M2 to M4 receives the request, and notifies its own mode information transmitting unit 210 of the received request.

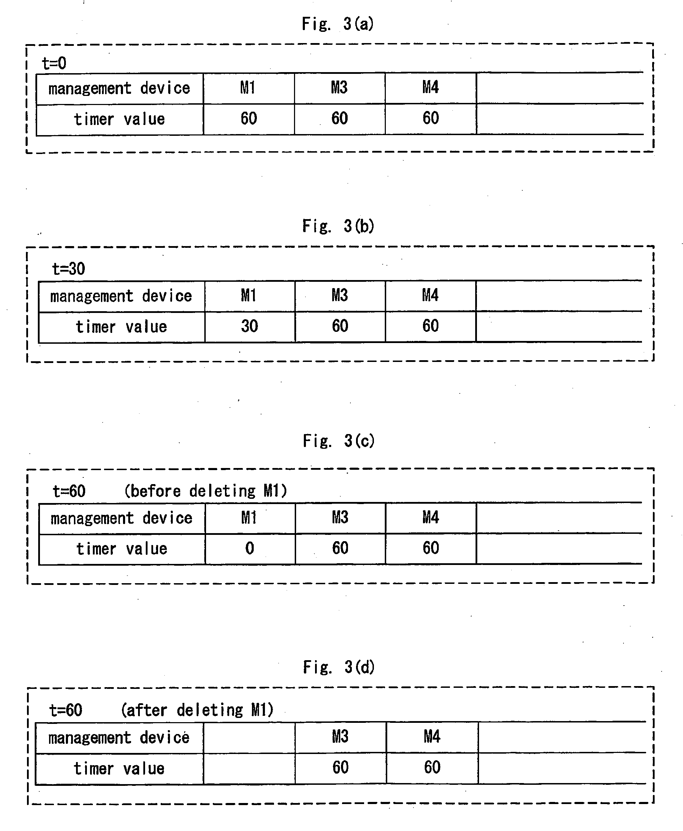

The mode determining unit 209 receives the mode information from the mode information receiving unit 211 or reads out the mode information from the mode information managing unit 208, and determines which mode the resource management device M1 should take. Then, the mode determining unit 209 stores the determined mode information in the mode information managing unit 208, and notifies the mode information transmitting unit 210 of the determined mode information. The mode determining unit 209 comprises a monitoring timer 209a. As shown in Fig. 3, the monitoring timer 209a is provided to deal with a timer value for every resource management device, and to measure the timing to monitor a mode of the other resource management devices. A mode setting unit 213 determines a mode that the resource management device M1 itself should adopt, and stores the determined mode in the mode information managing unit 208.

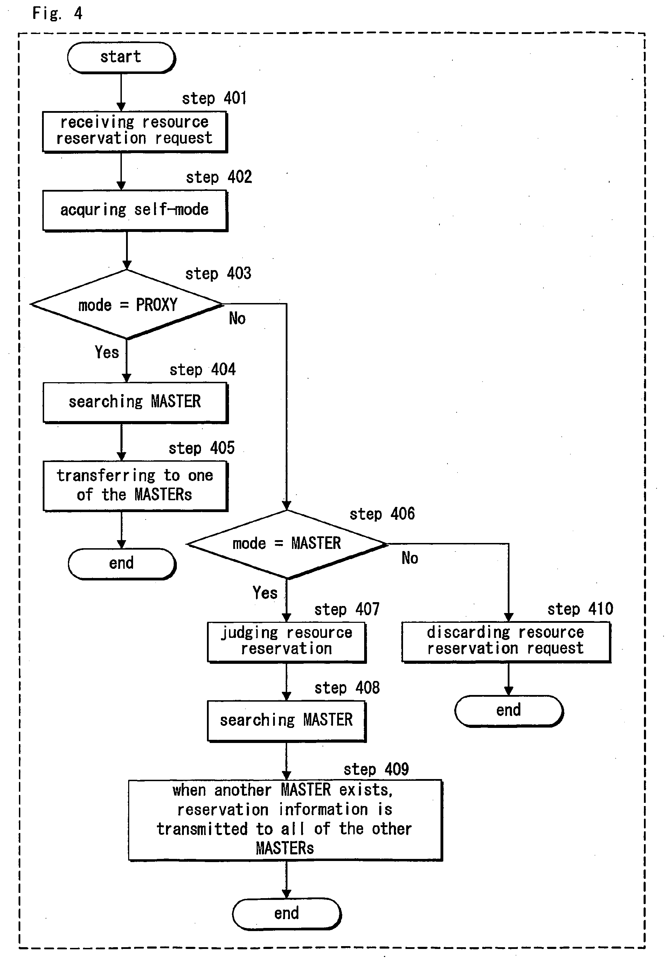

Next, using Fig. 4, operation of the resource management device M1 of Fig. 1 is described when the resource management device M1 receives a reservation request of resources.

First, when the resource management device M1 receives the reservation request of resources (Step 401), the resource management device M1 refers to the mode information managing unit 208, and acquires mode information of the resource management device M1 itself (Step 402).

When the mode of the resource management device M1 itself is a PROXY mode, the resource reservation request transferring unit 204 refers to the mode information managing unit 208, and searches other resource management devices for a MASTER-mode-operating resource management device (Step 404). Then the resource reservation request transferring unit 204 transfers the reservation request of resources to the MASTER-mode-operating resource management device (Step 405).

When the mode of the resource management device M1 itself is not the PROXY mode, the resource reservation request transferring unit 204 notifies the resource reservation judging unit 203 of the reservation request of resources.

When the mode of the resource management device M1 itself is a halt mode, the resource reservation judging unit 203 discards the reservation request of resources (Step 410).

When the mode of the resource management device M1 itself is a MASTER mode, the resource reservation judging unit 203 performs judgment of the resource reservation (Step 407), and notifies the resource reservation information transmitting unit 205 of the reserved resource information. The resource reservation information transmitting unit 205 refers to the mode information managing unit 208, and then searches other resource management devices for a MASTER-mode-operating resource management device (Step 408). The resource reservation information transmitting unit 205 transmits the reserved resource information to the MASTER-mode-operating resource management device except the resource management device M1 itself (Step 409).

Next, the sequence of the resource management in the present embodiment is explained using Fig. 1 through Fig. 7.

In the initial state shown in Fig. 1, it is assumed that four resource management devices M1, M2, M3 and M4 exist. It is also assumed that the resource management devices M1 and M2 are in the MASTER mode, that the resource management device M3 is in the PROXY mode, and that the resource management device M4 is in the halt mode. Mode information of each of the resource management devices M1, M2, M3 and M4 is periodically transmitted from each mode information transmitting unit 210 to all of the other resource management devices. All of the other resource management devices possess mode information of all resource management devices in each mode information management unit 208.

It is assumed that each communication device possesses information indicating the existence of the resource management devices M1, M2, M3 and M4. It is also assumed that each communication device can request reservation of bandwidth from a desired resource management device.

In the initial state as shown in Fig. 1, it is assumed that reservation of bandwidth is not yet made, and that the resource reservation information managing units 202 respectively belonging to the resource management devices M1, M2, M3 and M4 do not possess any reserved bandwidth information.

### (Request 1)

First, in Fig. 1, the transmitter T1 wants to start data transmission of 4Mbps to the receiver T3 (request 1). To start the data transmission, the transmitter T1 requests the resource management device M1 to make bandwidth reservation on a path (T1→T3).

Since the resource management device M1 is in the MASTER mode, the resource reservation judging unit 203 of the resource management device M1 receives the request 1, and performs judgment of the bandwidth reservation referring to the resource reservation information managing unit 202.

Since the resource reservation information managing unit 202 does not have any reserved bandwidth information, and communication devices on the path (T1→T3) can communicate up to 10Mbps, it is possible to communicate data of 4Mbps on the path (T1→T3). Therefore, the resource reservation judging unit 203 of the resource management device M1 judges that the bandwidth reservation is possible, and answers "the reservation is possible" to the transmitter T1. At the same time, the resource reservation judging unit 203 of the resource management device M1 registers reserved bandwidth information stating "T1→T3, 4Mbps" into the resource reservation information managing unit 202 of the resource management device M1. The transmitter T1 receives the answer from the resource management device M1 and starts the data transmission of 4Mbps.

The reserved bandwidth information is one of plural items of the reserved resource information described above.

The resource reservation judging unit 203 of the resource management device M1 notifies the resource reservation information transmitting unit 205 of the resource management device M1 of the reserved bandwidth information stating "T1→T3, 4Mbps", by which the bandwidth reservation has been allowed. The resource reservation information transmitting unit 205, which has received the reserved bandwidth information, searches a MASTER-mode-operating resource management device, by referring to the mode information managing unit 208.

In the example shown in Fig. 1, the resource management device M2 as well as the resource management device M1 is in the MASTER mode, therefore, the resource reservation information transmitting unit 205 of the resource management device M1 transmits the reserved bandwidth information to the resource management device M2. The resource reservation information receiving unit 206 of the resource management device M2 receives the reserved bandwidth information, confirms that there is no same reserved bandwidth information in the resource reservation information managing unit 202 of the resource management device M2, and then registers the reserved bandwidth information.

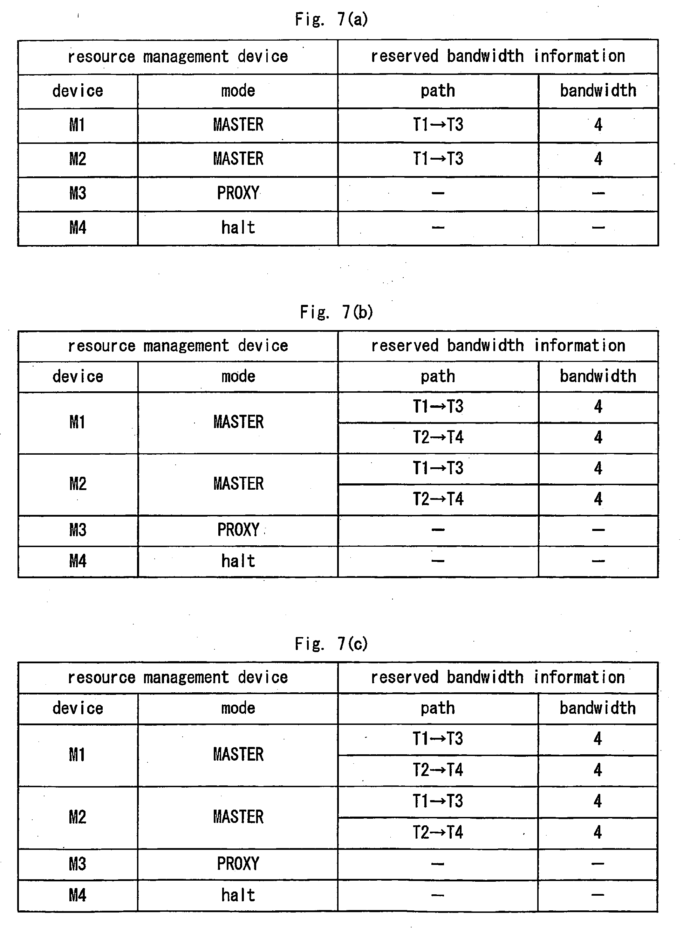

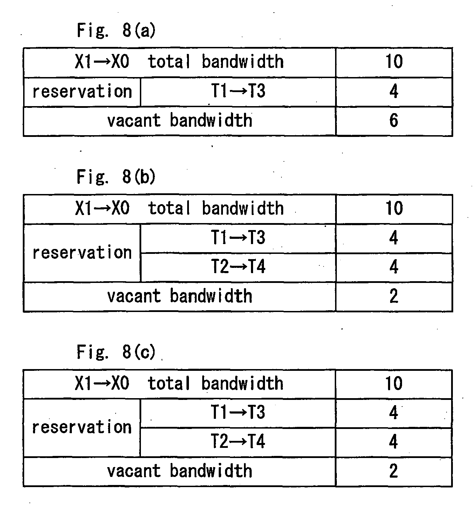

Fig. 7(a) shows the reserved bandwidth information, which the resource reservation information managing units 202 of each of the resource management devices M1-M4 possess in common. Fig. 8(a) shows a connection state (total bandwidth, reservation bandwidth, vacant bandwidth) of a link "X1→X0".

### (Request 2)

Next, in Fig. 1, the transmitter T2 wants to start data transmission of 4Mbps to the receiver T4. To start the data transmission, the transmitter T2 requests the resource management device M3 to make bandwidth reservation on a path (T2 →T4) (request 2).

Since the resource management device M3 is in the PROXY mode, the resource reservation request transferring unit 204 of the resource management device M3 receives the request 2 and searches a MASTER-mode-operating resource management device, by referring to the mode information managing unit 208 of the resource management device M3. The resource reservation request transferring unit 204 of the resource management device M3 then transfers the request 2 to the resource management device M2 that is in the MASTER mode.

Similar to the case of the request 1, the resource reservation judging unit 203 of the resource management device M2 receives the request 2, and judges that bandwidth reservation is possible and answers "the reservation is possible" to the transmitter T2. The resource reservation judging unit 203 of the resource management device M2 registers reserved bandwidth information stating "T2→T4, 4Mbps" into the resource reservation information managing unit 202 of the resource management device M2. The transmitter T2 receives the answer from the resource management device M2 and then starts the data transmission of 4Mbps.

Similar to the case of the request 1, the reserved bandwidth information stating "T2→T4, 4Mbps" is transmitted to the resource management device M1. As a result, the resource reservation information receiving unit 206 of the resource management device M1 registers the reserved bandwidth information into the resource reservation information managing unit 202 of the resource management device M1.

Fig. 7 (b) shows the reserved bandwidth information, which the resource reservation information management units 202 of each of the resource management devices M1-M4 possess in common at that time. Fig. 8(b) shows the connection state (total bandwidth, reservation bandwidth, vacant bandwidth) of the link "X1→X0" at that time.

### (Request 3)

Furthermore, in Fig. 1, the transmitter T1 wants to start data transmission of 4Mbps to the receiver T4. The transmitter T1 requests the resource management device M1 to make bandwidth reservation on a path (T1→T4) (request 3).

Since the resource management device M1 is in the MASTER mode, the resource reservation judging unit 203 of the resource management device M1 receives the request 3. Similar to the case of the request 1, the resource reservation judging unit 203 of the resource management device M1 judges the bandwidth reservation referring to the resource reservation information managing unit 202 of the resource management device M1.

The resource reservation information management unit 202 of the resource management device M1 possesses two pieces of the reserved bandwidth information stating "T1→T3, 4Mbps" and "T2→T4, 4Mbps". If data of 4Mbps is additionally transmitted on the path (T1→T4), data of 3 times of 4Mbps (12Mbps in total) is to be transmitted in the link "X1→X0". However, the total bandwidth of the link "X1→X0" is 10Mbps, and the data of 12Mbps can not be transmitted. Therefore, the resource reservation judging unit 203 of the resource management device M1 judges that reservation is impossible, and answers the fact that the reservation is impossible to the transmitter T1. As a result, the transmitter T1 cancels the data transmission.

Fig. 7(c) shows the reserved bandwidth information, which the resource reservation information managing units 202 of each of the resource management devices M1-M4 possess at this moment. Fig. 8(c) shows the connection state (all bandwidth, reservation bandwidth, vacant bandwidth) of the link "X1→X0"at this moment.

The plurality of the resource management devices M1-M4 can manage the reserved bandwidth information for the reserved bandwidth by the above-mentioned process. In addition, data transmission, which would exceed the available total bandwidth if performed, can be controlled not to be performed among the communication devices.

### (When inactivated)

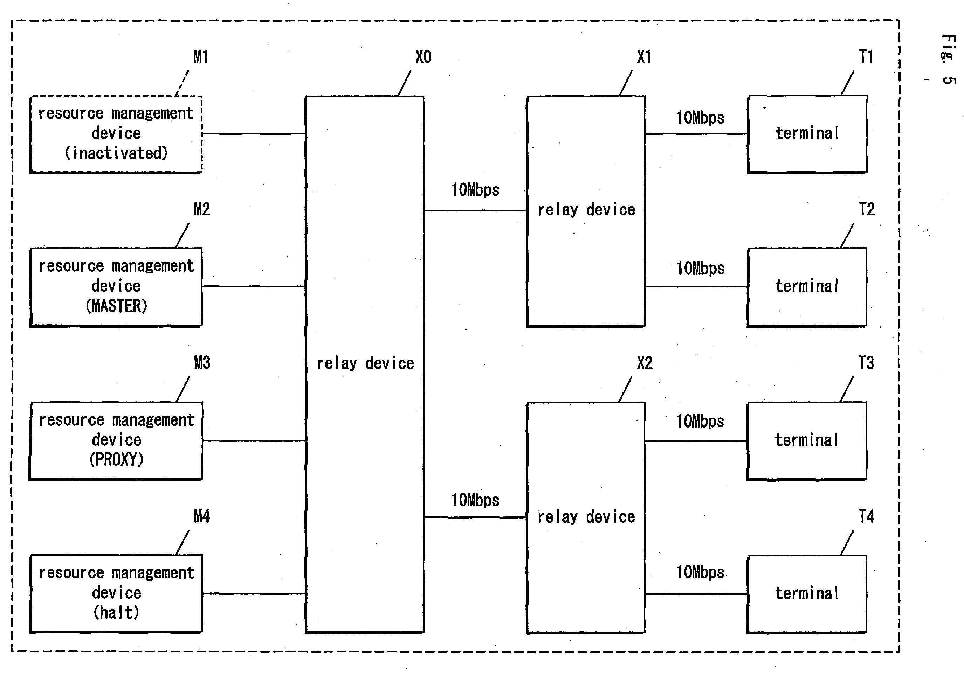

Next, operation of a resource management device M1 is explained for a case
where the resource management device M1 is brought to the inactivated state. Fig. 5 illustrates a network structure when the resource management device M1 is in the inactivated state.

Here, in Fig. 5, how the mode determining units 209 of each of the resource management devices M1-M4 detect the inactivated state of the resource management device M1 is explained by exemplifying the mode determining unit 209 of the resource management device M2. The resource management devices M3 and M4 also detect the inactivated state of the resource management device M1 in the same manner as the resource management device M2. In this example, it is assumed that each of the resource management devices M1-M4 transmits the mode information to the other resource management devices every 30 seconds.

After the mode determining unit 209 of the resource management device M2 receives the mode information from the other resource management devices M1, M3 and M4, the mode determining unit 209 of the resource management device M2 sets, as shown in Fig. 3(a), the monitoring timer 209a to a timer value "60" (t=0) for each of the resource management devices from which the mode determining unit 209 of the resource management device M2 has received the mode information. The monitoring timer 209a decrements each timer value by "1" for every one second, each timer value is set for each of the resource management devices that are monitored.

The resource management devices M3 and M4, which are in the activated state, transmit the mode information after 30 seconds (t=30). After the mode determining unit 209 of the resource management device M2 receives the mode information, the mode determining unit 209 of the resource management device M2 resets the monitoring timer 209a to a timer value "60" for the resource management device from which the mode information is received. As shown in Fig. 3(b), when t=30, the timer value of the resource management device M1 stays at a value "30", and the timer value is not reset to the value "60". This is because the resource management device M1 has been brought to the inactivated state, and there is no further mode information received from the resource management device M1.

When 30 more seconds have passed (t=60), the mode information is received from the resource management devices M3 and M4, then the timer values for the resource management devices M3 and M4 are reset to "60" again. However, as shown in Fig. 3(c), no mode information is received from the resource management device M1, and the timer value for the resource management device M1 is decremented to "0". The mode determining unit 209 of the resource management device M2 judges that the resource management device M1 is in the inactivated state, using as a trigger the fact that the timer value is decremented to "0". Then the mode determining unit 209 of the resource management device M2 deletes the information pertaining to the resource management device M1 from the mode information managing unit 208 of the resource management device M2 (Fig. 3(d)).

When the resource management device M1 is brought to the inactivated state, the mode determining units 209 of each of the resource management devices M2-M4 other than the resource management device M1 detect the inactivated state of the resource management device M1, and determine their own mode, referring to the mode information of the respective mode information managing unit 208.

In this example, it is determined that the resource management device M2 remains in the MASTER mode, the resource management device M3 remains in the PROXY mode, and the resource management device M4 is changed from in the halt mode to in the MASTER mode.

When the mode of the resource management devices M2-M4 is changed, the mode information transmitting unit 210 of the resource management device M4, which has changed its mode, transmits the mode information to the resource management devices M2 and M3. The mode information receiving units 211 of each of the resource management devices M2 and M3 receive the mode information, and notify respectively the mode determining units 209 of the mode information. While the mode determining units 209 store the mode information which the mode information managing units 208 have received, the mode determining units 209 change the timer value of their own monitoring timers 209a to a corresponding value.

When the resource management device M4 is in the halt mode, the resource reservation information managing unit 202 of the resource management device M4 does not possess the reserved bandwidth information. Therefore, when the mode for the resource management device M4 is changed to the MASTER mode, the resource management device M4 must collect the reserved bandwidth information from the resource management devices M2 and M3. For that reason, the mode determining unit 209 of the resource management device M4 requests the resource reservation information requesting unit 207 of the resource management device M4 to collect the reserved bandwidth information from the resource management device M2, which is in the MASTER mode. Then, the resource reservation information requesting unit 207 requests the resource management device M2 to transmit the reserved bandwidth information.

When the resource reservation information requesting unit 207 of the resource management device M2 receives the request to transmit the reserved bandwidth information, the resource reservation information requesting unit 207 of the resource management device M2 notifies the resource reservation information transmitting unit 205 belonging to the resource management device M2 of the request. The resource reservation information transmitting unit 205 reads out all the reserved bandwidth information from the resource reservation information managing unit 202 of the resource management device M2, then transmits the reserved bandwidth information to the resource management device M4.

The resource reservation information receiving unit 206 of the resource management device M4 receives the reserved bandwidth information, and stores the reserved bandwidth information in the resource reservation information managing unit 202 of the resource management device M4. Thus, the resource management device M4 can collect all the reserved bandwidth information.

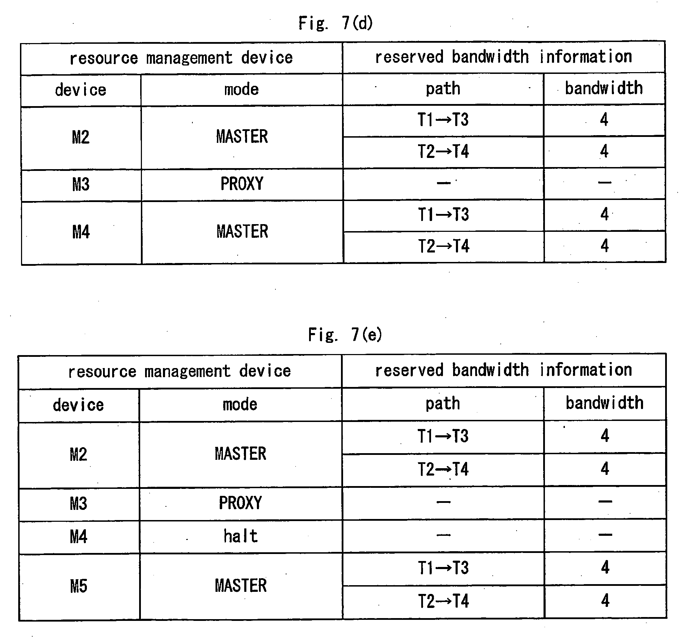

Fig. 7(d) shows the reserved bandwidth information, which the resource reservation information managing units of each resource management device possess at this moment.

Even when the resource management device M1 is in the inactivated state, the resource management devices M2-M4 can continue to perform contradiction-free resource management by the above-mentioned process.

In the above-mentioned example, after the resource management device M1 is brought to the inactivated state, the resource management device M4 acquires the reserved bandwidth information. However, the resource management device M4 may acquire the reserved bandwidth information beforehand when the resource management device M4 is in the halt mode or in the PROXY mode.

### (When activated)

Next, operation of a resource management device M5 is explained in case
where the resource management device M5 is newly brought to the activated state. Fig. 6 illustrates a network structure when the resource management device M5 is newly brought to the activated state.

When the resource management device M5 is newly brought to the activated state, a mode information requesting unit 212 of the resource management device M5 transmits a mode information request to other resource management devices M2-M4 in order to collect the mode information.

The mode information requesting units 212 of the resource management devices M2-M4 receive the mode information request, and notify respectively the mode information transmitting units 210 of the received mode information request. The mode information transmitting units 210 read out their own mode information from the respective mode information managing units 208, and transmit the mode information to the resource management device M5.

A mode information receiving unit 211 of the resource management device M5 receives the mode information that is transmitted by the resource management devices M2-M4, and notifies a mode determining unit 209 of the resource management device M5 of the mode information. The mode determining unit 209 of the resource management device M5 determines its own mode, based on the mode information of other resource management devices M2-M4. The mode determining unit 209 of the resource management device M5 transmits the mode information to other resource management devices M2-M4 from a mode information transmitting unit 210 of the resource management device M5, while storing the mode information in a mode information managing unit 208 of the resource management device M5.

Similar to the case where the resource management device M1 is brought to the inactivated state, the resource management devices M2-M4 determine their own mode and change the mode information of the respective mode information managing units 208. In this example, it is assumed that the resource management device M5 is changed to in the MASTER mode, the resource management device M4 is changed to in the halt mode, and the resource management devices M2 and M3 remain unchanged in their mode.

Similar to the case where when the resource management device M1 is brought to the inactivated state, the resource management device M4 is changed from in the halt mode to in the MASTER mode, the resource management device M5 newly operating in the MASTER mode collects all the reserved bandwidth information.

Fig. 7 (e) shows the reserved bandwidth information, which the resource reservation information managing units 202 of each of the resource management devices M2-M5 possess at this moment.

Thereby, even when the resource management device M5 is activated and brought to the MASTER mode, the resource management devices M2-M5 can continue to perform a contradiction-free resource management.

In the above-mentioned explanation, the mode of each of the resource management devices M2-M5 is determined after the resource management device M1 is inactivated, or after the resource management device M5 is activated. However, the mode may be determined in advance.

The mode of each of the resource management devices M2-M5 may be determined at arbitrary timing or periodically rather than at the timing at which the resource management device is activated or inactivated.

As the information for reserving resources, kinds of data, priority, and other information may be included, in addition to the names of transmitters and receivers and the resource amount that is used.

The mode that each resource management device should adopt may be determined at random or by referring to one or a plurality of: the address and name of the resource management device, the number assigned for the resource management device, the order and time of activating the resource management device, the hardware specification of the resource management device, the processing load of the resource management device, the memory amount used by the resource management device, the number and mode of other resource management devices, the number of communication devices, and the predetermined priority of the resource management device.

Transmission of the reserved bandwidth information, more generally the reserved resource information, may be performed without problem by using unicast, multicast or broadcast.

According to the present invention, even if it happens that one of the resource management devices stops its operation, the resource management of the system can be continued. According to the present invention, a plurality of the resource management devices exist and share the reserved resource information among them, therefore, the resource management can be performed without contradiction.

Since a plurality of the resource management devices determine whether the resource reservation is possible or not, the processing load can be decentralized. Furthermore, according to the present invention, one of the resource management devices may not judge whether or not the resource reservation is possible, but entrust of a resource management device with few system resources can be reduced.

### Industrial Applicability

A resource management device according to the present invention can be favorably used, for example, in a field of managing a packet communication network

Having described preferred embodiments of the invention with reference to the accompanying drawings, it is to be understood that the invention is not limited to those precise embodiments, and that various changes and modifications may be effected therein by one skilled in the art without departing from the scope of the invention as defined in the appended claims.

## Claims

1. A resource management device operative to manage, in harmony with another management device, resource reservation on a network to which a plurality of communication devices are adapted to connect, said resource management device comprising:
a resource reservation information managing unit operative to store reserved resource information, whereby
the reserved resource information stored by said resource reservation information managing unit is shared with the other management device,
**characterised in that** the resource management device further comprises:
a reservation judgment unit operative to judge whether or not reservation based on a reservation request from a communication device connecting to the network should be permitted, thereby storing reserved resource information concerning the reservation to said resource reservation information managing unit when the reservation is judged to be permitted;
a resource reservation information transmitting unit operative to transmit to the other management device the reserved resource information that said reservation judgment unit has stored to said resource reservation information managing unit; and
a resource reservation information receiving unit operative to receive reserved resource information from the other management device, thereby storing the received reserved resource information to said resource reservation information managing unit.

2. The resource management device as claimed in claim 1, further comprising:
a resource reservation information requesting unit operative to transmit to the other management device a transmission request for reserved reservation information,
wherein said resource reservation information requesting unit is further operative to transmit to the other management device the reserved resource information stored by said resource reservation information managing unit according to a transmission request from the other management device.

3. The resource management device as claimed in claim 1, further comprising:
a mode information managing unit operative to store operation mode information; and
a mode setting unit operative to determine operation mode information of said resource management device, thereby storing the determined operation mode information to said mode information managing unit.

4. The resource management device as claimed in claim 3,
wherein a mode indicated by the operation mode information includes a master mode where said resource management device itself performs reservation judgment.

5. The resource management device as claimed in claim 3,
wherein a mode indicated by the operation mode information includes a proxy mode where said resource management device does not perform reservation judgment and entrusts the reservation judgment to the other management device.

6. The resource management device as claimed in claim 3,
wherein a mode indicated by the operation mode information includes a halt mode where said resource management device is not concerned with reservation judgment.

7. The resource management device as claimed in claim 3, further comprising:
a resource reservation request transferring unit operative to receive a resource reservation request from a communication device connecting to the network,
wherein said resource reservation request transferring unit is further operative to transfer the received resource reservation request to the other management device, after referring to said mode information managing unit.

8. The resource management device as claimed in claim 3, further comprising:
a mode information receiving unit operative to receive operation mode information from the other management device, thereby storing the received operation mode information to said mode information managing unit.

9. The resource management device as claimed in claim 3, further comprising:
a mode determining unit operative to determine operation mode information of said resource management device; and
a mode information transmitting unit operative to transmit to the other management device the operation mode information determined by said mode determining unit.

10. The resource management device as claimed in claim 9, further comprising:
a mode information requesting unit operative to request the other management device to transmit operation mode information of the other management device,
wherein said mode information requesting unit is further operative to notify said mode determining unit of the operation mode information received from the other management device.

## Patentansprüche

1. Betriebsmittelverwaltungsvorrichtung, die so betreibbar ist, dass sie in Einklang mit einer anderen Verwaltungsvorrichtung eine Betriebsmittelreservierung in einem Netzwerk verwaltet, mit dem mehrere Kommunikationsvorrichtungen verbunden werden können, wobei die Betriebsmittelverwaltungsvorrichtung eine Betriebsmittelreservierungsinformationen-Verwaltungseinheit aufweist, die so betreibbar ist, dass sie Reservierte-Betriebsmittel-Informationen speichert, wodurch die von der Betriebsmittelreservierungsinformationen-Verwaltungseinheit gespeicherten Reservierte-Betriebsmittel-Informationen gemeinsam mit der anderen Verwaltungsvorrichtung verwendet werden,
**dadurch gekennzeichnet, dass** die Betriebsmittelverwaltungsvorrichtung weiterhin Folgendes aufweist:
eine Reservierungsentscheidungseinheit, die so betreibbar ist, dass sie entscheidet, ob eine Reservierung aufgrund einer Reservierungsanforderung von einer mit dem Netzwerk verbundenen Kommunikationsvorrichtung zugelassen werden sollte oder nicht, wobei Reservierte-Betriebsmittel-Informationen zu der Reservierung in der Betriebsmittelreservierungsinformationen-Verwaltungseinheit gespeichert werden, wenn entschieden wird, dass die Reservierung zugelassen wird;
eine Betriebsmittelreservierungsinformationen-Sendeeinheit, die so betreibbar ist, dass sie die Reservierte-Betriebsmittel-Informationen, die die Reservierungsentscheidungseinheit in der Betriebsmittelreservierungsinformationen-Verwaltungseinheit gespeichert hat, an die andere Verwaltungsvorrichtung sendet; und
eine Betriebsmittelreservierungsinformationen-Empfangseinheit, die so betreibbar ist, dass sie Reservierte-Betriebsmittel-Informationen von der anderen Verwaltungsvorrichtung empfängt, wobei die empfangenen Reservierte-Betriebsmittel-Informationen in der Betriebsmittelreservierungsinformationen-Verwaltungseinheit gespeichert werden.

2. Betriebsmittelverwaltungsvorrichtung nach Anspruch 1, die weiterhin eine Betriebsmittelreservierungsinformationen-Anforderungseinheit aufweist, die so betreibbar ist, dass sie an die andere Verwaltungsvorrichtung eine Sende-Anforderung für die Reservierte-Betriebsmittel-Informationen sendet,
wobei die Betriebsmittelreservierungsinformationen-Anforderungseinheit weiterhin so betreibbar ist, dass sie an die andere Verwaltungsvorrichtung die von der Betriebsmittelreservierungsinformationen-Verwaltungseinheit gespeicherten Reservierte-Betriebsmittel-Informationen entsprechend einer Sende-Anforderung von der anderen Verwaltungsvorrichtung sendet.

3. Betriebsmittelverwaltungsvorrichtung nach Anspruch 1, die weiterhin Folgendes aufweist:
eine Modusinformationen-Verwaltungseinheit, die so betreibbar ist, dass sie Betriebsmodus-Informationen speichert; und
eine Modus-Ermittlungseinheit, die so betreibbar ist, dass sie Betriebsmodus-Informationen der Betriebsmittelverwaltungsvorrichtung ermittelt, wobei die ermittelten Betriebsmodus-Informationen in der Modusinformationen-Verwaltungseinheit gespeichert werden.

4. Betriebsmittelverwaltungsvorrichtung nach Anspruch 3, **dadurch gekennzeichnet, dass** ein Modus, der von den Betriebsmodus-Informationen angegeben wird, einen Master-Modus umfasst, in dem die Betriebsmittelverwaltungsvorrichtung selbst die Reservierungsentscheidung durchführt.

5. Betriebsmittelverwaltungsvorrichtung nach Anspruch 3, **dadurch gekennzeichnet, dass** ein Modus, der von den Betriebsmodus-Informationen angegeben wird, einen Proxy-Modus umfasst, in dem die Betriebsmittelverwaltungsvorrichtung keine Reservierungsentscheidung durchführt und die andere Verwaltungsvorrichtung mit der Reservierungsentscheidung betraut.

6. Betriebsmittelverwaltungsvorrichtung nach Anspruch 3, **dadurch gekennzeichnet, dass** ein Modus, der von den Betriebsmodus-Informationen angegeben wird, einen Stoppmodus umfasst, in dem die Betriebsmittelverwaltungsvorrichtung nicht mit der Reservierungsentscheidung befasst wird.

7. Betriebsmittelverwaltungsvorrichtung nach Anspruch 3, die weiterhin eine Betriebsmittelreservierungsanforderungs-Sendeeinheit aufweist, die so betreibbar ist, dass sie eine Betriebsmittelreservierungsanforderung von einer mit dem Netzwerk verbundenen Kommunikationsvorrichtung empfängt,
wobei die Betriebsmittelreservierungsanforderungs-Sendeeinheit weiterhin so betreibbar ist, dass sie die empfangene Betriebsmittelreservierungsanforderung an die andere Verwaltungsvorrichtung sendet, nachdem sie die Modusinformationen-Verwaltungseinheit referenziert hat.

8. Betriebsmittelverwaltungsvorrichtung nach Anspruch 3, die weiterhin eine Modusinformationen-Empfangseinheit aufweist, die so betreibbar ist, dass sie Betriebsmodus-Informationen von der anderen Verwaltungsvorrichtung empfängt, wobei sie die empfangenen Betriebsmodus-Informationen in der Modusinformationen-Verwaltungseinheit speichert.

9. Betriebsmittelverwaltungsvorrichtung nach Anspruch 3, die weiterhin Folgendes aufweist:
eine Modus-Ermittlungseinheit, die so betreibbar ist, dass sie Betriebsmodus-Informationen der Betriebsmittelverwaltungsvorrichtung ermittelt; und
eine Modusinformationen-Sendeeinheit, die so betreibbar ist, dass sie die von der Modus-Ermittlungseinheit ermittelten Betriebsmodus-Informationen an die andere Verwaltungsvorrichtung sendet.

10. Betriebsmittelverwaltungsvorrichtung nach Anspruch 9, die weiterhin eine Modusinformationen-Anforderungseinheit aufweist, die so betreibbar ist, dass sie die andere Verwaltungsvorrichtung auffordert, Betriebsmodus-Informationen der anderen Verwaltungsvorrichtung zu senden,
wobei die Modusinformationen-Anforderungseinheit weiterhin so betreibbar ist, dass sie der Modus-Ermittlungseinheit die von der anderen Verwaltungsvorrichtung empfangenen Betriebsmodus-Informationen mitteilt.

## Revendications

1. Dispositif de gestion de ressources utilisable pour gérer, en harmonie avec un autre dispositif de gestion, une réservation de ressources sur un réseau auquel une pluralité de dispositifs de communication sont adaptés à se connecter, ledit dispositif de gestion de ressources comprenant :
une unité de gestion d'informations de réservation de ressources utilisable pour stocker des informations de ressources réservées, d'où il résulte que
les informations de ressources réservées stockées par ladite unité de gestion d'informations de réservation de ressources sont partagées avec l'autre dispositif de gestion,
**caractérisé en ce que** le dispositif de gestion de ressources comprend en outre :
une unité de jugement de réservation utilisable pour juger si une réservation basée sur une demande de réservation provenant d'un dispositif de communication se connectant au réseau doit être ou non autorisée, stockant ainsi des informations de ressources réservées concernant la réservation dans ladite unité de gestion d'informations de réservation de ressources lorsque la réservation est jugée être autorisée ;
une unité de transmission d'informations de réservation de ressources utilisable pour transmettre à l'autre dispositif de gestion les informations de ressources réservées que ladite unité de jugement de réservation a stocké dans ladite unité de gestion d'informations de réservation de ressources ; et
une unité de réception d'informations de réservation de ressources utilisable pour recevoir des informations de ressources réservées provenant de l'autre dispositif de gestion, stockant ainsi les informations de ressources réservées reçues dans ladite unité de gestion d'informations de réservation de ressources.

2. Dispositif de gestion de ressources selon la revendication 1, comprenant en outre :
une unité de demande d'informations de réservation de ressources utilisable pour transmettre à l'autre dispositif de gestion une demande de transmission pour des informations de réservation de ressources,
dans lequel ladite unité de demande d'informations de réservation de ressources est en outre utilisable pour transmettre à l'autre dispositif de gestion les informations de ressources réservées stockées par ladite unité de gestion d'informations de réservation de ressources en fonction d'une demande de transmission provenant de l'autre dispositif de gestion.

3. Dispositif de gestion de ressources selon la revendication 1, comprenant en outre :
une unité de gestion d'informations de mode pour stocker des informations de mode d'opération ; et
une unité de définition de mode utilisable pour déterminer des informations de mode d'opération dudit dispositif de gestion de ressources, stockant ainsi les informations de mode d'opération déterminées dans ladite unité de gestion d'informations de mode.

4. Dispositif de gestion de ressources selon la revendication 3, dans lequel un mode indiqué par les informations de mode d'opération inclut un mode maître dans lequel ledit dispositif de gestion de ressources effectue lui-même le jugement de réservation.

5. Dispositif de gestion de ressources selon la revendication 3, dans lequel un mode indiqué par les informations de mode d'opération inclut un mode proxy dans lequel ledit dispositif de gestion de ressources n'effectue pas de jugement de réservation et confie le jugement de réservation à l'autre dispositif de gestion.

6. Dispositif de gestion de ressources selon la revendication 3, dans lequel un mode indiqué par les informations de mode d'opération inclut un mode halte dans lequel ledit dispositif de gestion de ressources n'est pas concerné par le jugement de réservation.

7. Dispositif de gestion de ressources selon la revendication 3, comprenant en outre :
une unité de transfert de demande de réservation de ressources utilisable pour recevoir une demande de réservation de ressources provenant d'un dispositif de communication se connectant au réseau,
dans lequel ladite unité de transfert de demande de réservation de ressources est en outre utilisable pour transférer la demande de réservation de ressources reçue à l'autre dispositif de gestion, après référence à ladite unité de gestion d'informations de mode.

8. Dispositif de gestion de ressources selon la revendication 3, comprenant en outre :
une unité de réception d'informations de mode utilisable pour recevoir des informations de mode d'opération provenant de l'autre dispositif de gestion, stockant ainsi les informations de mode d'opération reçues dans ladite unité de gestion d'informations de mode.

9. Dispositif de gestion de ressources selon la revendication 3, comprenant en outre :
une unité de détermination de mode utilisable pour déterminer des informations de mode d'opération dudit dispositif de gestion de ressources ; et
une unité de transmission d'informations de mode utilisable pour transmettre à l'autre dispositif de gestion les informations de mode d'opération déterminées par ladite unité de détermination de mode.

10. Dispositif de gestion de ressources selon la revendication 9, comprenant en outre :
une unité de demande d'informations de mode utilisable pour demander à l'autre dispositif de gestion de transmettre les informations de mode d'opération de l'autre dispositif de gestion,
dans lequel ladite unité de demande d'informations de mode est en outre utilisable pour notifier à ladite unité de détermination de mode les informations de mode d'opération reçues de l'autre dispositif de gestion.
